# EUROPEAN PATENT APPLICATION

(11) **EP 4 391 193 A1**
(43) Date of publication of application: **26.06.2024**
(21) Application number: 22954611.4
(22) Date of filing: 12.08.2022
(51) Int. Cl.: H01M 50/446

(54) **SEPARATOR AND PREPARATION METHOD THEREFOR, SECONDARY BATTERY USING SEPARATOR, BATTERY MODULE, BATTERY PACK, AND ELECTRICAL DEVICE**

(71) Applicant: Contemporary Amperex Technology Co., Limited, Ningde, Fujian 352100 (CN)
(72) Inventor: ZHONG, Wei, Ningde, Fujian 352100 (CN); GE, Xiaoming, Ningde, Fujian 352100 (CN); OUYANG, Chuying, Ningde, Fujian 352100 (CN); FAN, Yulei, Ningde, Fujian 352100 (CN); LIU, Feng, Ningde, Fujian 352100 (CN)
(74) Representative: Gong, Jinping
(86) International application number: PCT/CN2022/112165
(87) International publication number: WO 2024/031652

(57) **Abstract**

The present application provides a separator comprising a base film and a coating on the base film, wherein the coating comprises a ceramic layer partially embedded in the base film and a boehmite-like layer on the ceramic layer. The separator of the present application may effectively consume lithium dendrites, avoids the lithium dendrites from piercing the separator, and at the same time has a relatively low internal resistance. The present application further provides a method for preparing the separator, and a secondary battery, a battery module using the separator, a battery pack, and a power consuming device.

## Description

### Technical Field

The present application relates to the technical field of lithium batteries, and in particular to a separator, a preparation method therefor, and a secondary battery using same, a battery module, a battery pack, and a power consuming device.

### Background Art

In recent years, as lithium-ion batteries are increasingly used in a wider range of applications, they have found wide use in a variety of applications, such as energy storage systems such as wind power, fire power, hydro power, and solar power stations, and in various fields such as electric tools and electric bicycles. A lithium-ion battery generally comprises a positive and a negative electrode plate, an electrolyte solution, and a separator arranged between the positive and negative electrode plates. The separator is mainly used for preventing short-circuit of positive and negative electrodes and enables ions to pass through freely. Most of the separators used in the prior art are polyolefin films. However, lithium dendrites generated during the use of the batteries may pierce the separator, thereby resulting in a short circuit of the batteries, causing a safety risk.

To solve the above problems, the technicians generally apply an inorganic coating on the separator to avoid the lithium dendrites from piercing the separator. However, when the inorganic coating is applied, it is often necessary to use a large amount of a binder, resulting in an increased internal resistance of the separator.

Therefore, it can be seen that it is still an urgent problem needed to be solved by research personnel to develop a separator having both a good safety performance and a relatively low internal resistance.

### Summary of the Invention

In view of the above problem, the present application is made and aims to provide a separator, which may effectively avoid lithium dendrites from piercing a base film and has a relatively low internal resistance.

A first aspect of the present application provides a separator comprising a base film and a coating on the base film, wherein the coating comprises a ceramic layer partially embedded in the base film and a boehmite-like layer on the ceramic layer.

The separator in the present application comprises a ceramic layer and a boehmite-like layer, which may effectively consume lithium dendrites generated during the use of a secondary battery, avoids the lithium dendrites from piercing the separator, and improves the safety performance of the corresponding secondary battery. More importantly, the creatively partially embedding the ceramic layer in the base film may avoid the use of a large amount of a binder, and thus effectively reducing the internal resistance of the separator.

In any embodiment, optionally, a portion of the ceramic layer embedded in the base film accounts for 5%-100%, optionally 10%-100%, and more optionally 50%-100% of the total thickness of the ceramic layer.

When the portion of the ceramic layer partially embedded in the base film in the ceramic layer as a percentage of the total thickness of the ceramic layer is in the above range, it facilitates the binding of the ceramic particles by using the melting interface of the base film itself, reducing the use of the binder, and thus reducing the internal resistance of the separator.

In any embodiment, optionally, the coating further comprises a thermally conductive layer on a surface, away from the base film, of the boehmite-like layer.

The presence of the thermally conductive layer is beneficial to reducing the occurrence of the lithium dendrites from the source, and further improves the safety performance of the separator.

In any embodiment, optionally, the separator satisfies at least one of the following conditions:
(1) a thickness of the ceramic layer is 0.5-10 µm, optionally 2-7 µm;
(2) a thickness of the base film is 4-20 µm, optionally 5-12 µm;
(3) a thickness of the boehmite-like layer is 0.5-10 µm, optionally 2-7 µm; and
(4) a thickness of the thermally conductive layer is 0.5-2 µm, optionally 0.5-1 µm.

When the separator satisfies one or more of the above conditions, it is beneficial to further improve the safety performance of the separator, and reduce the internal resistance of the separator.

In any embodiment, optionally, the ceramic is selected from one or more of an oxide, a nitride, a fluoride or an oxysalt of the following elements: Al, Fe, Ti, Co, Zn, Cu, Ni, Mn or Sn;
optionally, the ceramic is selected from one or more of an Fe oxide, an Fe oxysalt, a Ti oxide, a Ti oxysalt, a Zn oxide, NiO, CuO, or SnO₂; and
more optionally, the ceramic is selected from one or more of Fe₂O₃, FePO₄, TiO₂, ZnO, Li₄Ti₅O₁₂, NiO, CuO, or SnO₂.

In any embodiment, optionally, the ceramic is a number of ceramic particles, and the ceramic particle has a volume-average particle size Dv50 ≥ 100 nm, optionally 100 nm-5 µm, and more optionally 200 nm-2 µm.

When the volume-average particle size of the ceramic particles is within the above range, the safety performance of the separator is favorably improved, and the internal resistance of the separator is reduced.

In any embodiment, optionally, the boehmite-like layer is selected from one or more of boehmite, alumina, zirconia or magnesia.

In any embodiment, optionally, the thermally conductive layer has a thermal conductivity coefficient ≥ 20 W/(m.K); and
optionally, the thermally conductive layer is selected from one or more of boron nitride, tungsten nitride, silicon carbide, or aluminum nitride.

When the thermally conductive layer in the separator satisfies the above conditions, it is beneficial to improve the safety performance of the separator, and reduce the internal resistance of the separator is reduced.

In any embodiment, optionally, the base film is selected from one or more of polyethylene, polypropylene, polyvinylidene fluoride, aramid fiber, polyethylene terephthalate, polytetrafluoroethylene, polyacrylonitrile, polyimide, polyamide, polyester or natural fibers; and
optionally, the base film is selected from one or more of polyethylene, polypropylene, polyvinylidene fluoride, or polytetrafluoroethylene.

A second aspect of the present application provides a method for preparing the separator of the first aspect of the present application, comprising the steps:
1) melting a mixture containing a base film raw material of a separator and a pore-forming agent, and then extruding the mixture to form a base film A;
2) uniformly dispersing the ceramic particles on one surface of the base film A to obtain a composite base film; and
3) uniformly coating boehmite-like particles and an optional thermally conductive material onto the composite base film obtained in step 2) sequentially.

In any embodiment, optionally, a mass ratio of the base film raw material of a separator and the pore-forming agent in the mixture of step 1) is (0.1-0.7) : 1.

In any embodiment, optionally, step 1) further comprises a step of passing through a casting cooling roller after the extrusion.

In any embodiment, optionally, step 2) is performed synchronously with the passing through a casting cooling roller; or
step 2) is performed no later than 10 s-1 h, optionally no later than 1-30 min, and more optionally immediately after step 1).

In any embodiment, optionally, step 2) further comprises a step of passing through a thermal compounding roller or drying in an oven.

In any embodiment, optionally, step 2) satisfies one or more of the following conditions:
(1) a temperature of the thermal compounding roller is 80-190°C, optionally 100-180°C; and
(2) a pressure of the thermal compounding roller is 5-100 MPa, optionally 10-50 MPa.

In any embodiment, optionally, after step 2) and before step 3), a step of stretching the composite base film is further comprised.

In any embodiment, optionally, after the composite base film is stretched, the method further comprises a step of extracting the pore-forming agent from the composite base film.

A third aspect of the present application provides a secondary battery comprising the separator of the first aspect of the present application or the separator prepared by the method of the second aspect of the present application.

A fourth aspect of the present application provides a battery module, comprising the secondary battery of the third aspect of the present application.

A fifth aspect of the present application provides a battery pack comprising at least one of the secondary battery of the third aspect of the present application or the battery module of the fourth aspect of the present application.

A sixth aspect of the present application provides a power consuming device comprising at least one of the secondary battery of the third aspect of the present application, the battery module of fourth aspect of the present application, or the battery pack of the fifth aspect of the present application.

### [Beneficial effects]

The separator of the present application comprises a ceramic layer partially embedded in a base film. The ceramic layer may well consume lithium dendrites generated in a use process of a battery, such as the lithium dendrites generated by lithium precipitation or lithium deposition on a surface of a negative electrode, so as to avoid the lithium dendrites from piercing the separator and improve a safety performance. Meanwhile, the ceramic layer is partially embedded in the base film creatively, a constraint on a ceramic particle is realized by utilizing bonding of a self-melting interface of the base film of the separator, so as to greatly reduce use of a binder and avoid a great increase of an internal resistance of the separator.

The separator of the present application further comprises a boehmite-like layer on the ceramic layer. The boehmite-like layer has a good thermal stability, and may prevent a further growth of lithium dendrites, and also prevent a reaction of ceramic and metal lithium on a surface of an electrode before the lithium dendrites appear, so as to avoid an excessive loss of lithium in the battery.

### Brief Description of the Drawings

FIG. 1 is a schematic diagram of a separator of the present application.
FIG. 2 is a schematic diagram of a secondary battery according to an embodiment of the present application.
FIG. 3 is an exploded view of a secondary battery according to an embodiment of the present application shown in FIG. 2.
FIG. 4 shows a schematic diagram of a battery module according to an embodiment of the present application.
FIG. 5 shows a schematic diagram of a battery pack according to an embodiment of the present application.
FIG. 6 shows an exploded view of a battery pack according to an embodiment of the present application shown in FIG. 5.
FIG. 7 shows a schematic diagram of a power consuming device using the secondary battery according to an embodiment of the present application as a power source.

### List of reference numerals:

1 battery pack; 2 upper box body; 3 lower box body; 4 battery module; 5 secondary battery; 51 shell body; 52 electrode assembly; 53 top cover assembly; 11 base film; 12 ceramic layer; 13 boehmite-like layer; and 14 thermally conductive layer

### Detailed Description of Embodiments

Hereafter, embodiments of the separator, the preparation method therefor, and the secondary battery, the battery module, the battery pack, and the power consuming device using same of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "range" disclosed in the present application is defined in the form of lower and upper limits. A given range is defined by selecting a lower limit and an upper limit, and the selected lower and upper limits define the boundary of the particular range. The range defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, wherein both a and b are real numbers. For example, the numerical range "0-5" means that all the real numbers between "0-5" have been listed herein, and "0-5" is just an abbreviated representation of a combination of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application may be combined with each other to form a new technical solution, unless otherwise stated.

All technical features and optional technical features of the present application may be combined with each other to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, and may also include steps (b) and (a) performed sequentially. For example, reference to the method may further comprise step (c) indicates that step (c) may be added to the method in any order, e.g., the method may comprise steps (a), (b), and (c), or steps (a), (c), and (b), or steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

It should be noted that in the present application, not all the ceramic particles embedded in the base film are in a continuous state formed by the ceramic particles physically interconnected, and the ceramic particles may be in a discrete state. The term "ceramic layer" is a layer statistically formed of ceramic particles, with respect to the boehmite layer and the thermally conductive layer, for convenience of description only. In the present application, it is desirable that the ceramic particles are interconnected to form a continuous state, and at this time, lithium dendrites are consumed with a good effect.

In the present application, the term "or" is inclusive unless otherwise specified. For example, the phrase "A or B" means "A, B, or both A and B". More specifically, the condition "A or B" is satisfied by any one of the following conditions: A is true (or present) and B is false (or not present); A is false (or not present) and B is true (or present); or both A and B are true (or present).

In actual work, the inventors find that in the prior art, in order to avoid the lithium dendrites from piercing the separator to cause a safety risk, an inorganic coating is generally applied to a surface of a polyolefin film. However, to avoid "dropping" of inorganic particles, it is often necessary to use a large amount of a binder, resulting in a significant increase in an internal resistance of the separator.

After a large number of studies, the inventors creatively embed the ceramic particles partially in a polyolefin base film and coat a boehmite-like layer on the ceramic particles, thereby effectively avoiding the lithium dendrites from piercing the separator and simultaneously enabling the internal resistance of the separator to be relatively small. In addition, a performance of the separator may be further improved by further regulating and controlling a thicknesses of the ceramic layer and the boehmite-like layer and further modifying the separator through the thermally conductive layer.

### [Separator]

A first aspect of the present application provides a separator comprising a base film and a coating on the base film, wherein the coating comprises a ceramic layer partially embedded in the base film and a boehmite-like layer on the base film.

The separator of the present application comprises a ceramic layer partially embedded in a base film. The ceramic layer may well consume lithium dendrites generated in a use process of a battery, such as the lithium dendrites generated by lithium precipitation or lithium deposition on a surface of a negative electrode, so as to avoid the lithium dendrites from piercing the separator and improve a safety performance. Meanwhile, the ceramic particle is partially embedded in the base film creatively, a constraint on the ceramic particle is realized by utilizing bonding of a self-melting interface of the base film of the separator, so as to greatly reduce use of a binder and avoid a great increase of an internal resistance of the separator. In addition, the ceramic particles contain a plurality of groups with a better compatibility with an electrolyte solution, which is beneficial to reducing a contact angle with the electrolyte solution, improving an affinity of the base film to the electrolyte solution, and further improving a wettability of the electrolyte solution to the base film. In addition, since the ceramic has a better thermal stability, a thermal stability of the separator may be effectively improved by compounding the ceramic and the base film.

The separator of the present application further comprises a boehmite-like layer on the ceramic layer. The boehmite-like layer has a good thermal stability, and may prevent a further growth of lithium dendrites, and also prevent a reaction of ceramic and metal lithium on a surface of an electrode before the lithium dendrites appear, so as to avoid an excessive loss of lithium in the battery.

In some embodiments, optionally, the ceramic layer partially contains a binder or does not contain a binder.

In some embodiments, optionally, the use amount of the binder is 0-10 wt% based on the total weight of the ceramic layer. As an example, the use amount of the binder may be 0%, 3%, 5%, 7%, or 10%, and a range consisting of any two of these values.

In some embodiments, optionally, a part of the ceramic layer embedded in the base film accounts for 5%-100%, optionally 10%-100%, and more optionally 50%-100% of a total thickness of the ceramic layer. As an example, a thickness of a part of the ceramic layer embedded in the base film accounts for 5%, 10%, 50%, 70%, 80%, or 100%, and a range consisting of any two of the values of the total thickness of the ceramic layer.

When a part of the ceramic layer embedded in the base film is in the range, it is beneficial to bind the ceramic particles by using a self-melting interface of the base film, reduce the use of the binder, and reduce the internal resistance of the separator.

In some embodiments, optionally, the coating further comprises a thermally conductive layer on a surface, away from the base film, of the boehmite-like layer.

The thermally conductive layer is a highly thermally conductive film, such as hexagonal boron nitride (h-BN), and mainly used for providing a uniform thermal field environment to avoid an occurrence of a local hot spot, enabling deposition/dissolution of lithium ions to be uniform, and further reducing an occurrence of the lithium dendrites from the source. In addition, the thermally conductive layer may further facilitate the formation of an inorganic solid electrolyte interface (SEI) film, thereby reducing the occurrence of the lithium dendrites. At the same time, the thermally conductive layer is an insulator and does not consume active lithium.

In some embodiments, optionally, the separator satisfies at least one of the following conditions:
(1) a thickness of the ceramic layer is 0.5-10 µm, optionally 2-7 µm;
(2) a thickness of the base film is 4-20 µm, optionally 5-12 µm;
(3) a thickness of the boehmite-like layer is 0.5-10 µm, optionally 2-7 µm; and
(4) a thickness of the thermally conductive layer is 0.5-2 µm, optionally 0.5-1 µm.

When the separator satisfies one or more of the above conditions, it is beneficial to further improve the safety performance of the separator, and reduce the internal resistance of the separator.

In some embodiments, optionally, a ratio of the thickness of the ceramic layer to that of the boehmite-like layer is 0.05-20, optionally 0.28-3.5. As an example, the ratio may be 5 : 1, 4 : 1, 3.5 : 1, 1 : 1, 1 : 3.5, 1 : 4 or 1 : 5, and a range consisting of any two of these values.

In some embodiments, optionally, a ratio of the thickness of the boehmite-like layer to that of the thermally conductive layer is 0.25-20, optionally 2-14. As an example, the ratio may be 0.5 : 1, 1 : 1, 2 : 1, 2 : 0.5, 7 : 1 or 10 : 1, and a range consisting of any two of these values.

When the thicknesses of the ceramic layer and the boehmite-like layer or the boehmite-like layer and the thermally conductive layer in the separator satisfy the above conditions, it is beneficial to improve the safety performance of the separator, and reduce the internal resistance of the separator.

In some embodiments, optionally, the ceramic is selected from one or more of an oxide, a nitride, a fluoride or an oxysalt of the following elements: Al, Fe, Ti, Co, Zn, Cu, Ni, Mn or Sn;
optionally, the ceramic is selected from one or more of an Fe oxide, an Fe oxysalt, a Ti oxide, a Ti oxysalt, a Zn oxide, NiO, CuO, or SnO₂; and
more optionally, the ceramic is selected from one or more of Fe₂O₃, FePO₄, TiO₂, ZnO, Li₄Ti₅O₁₂, NiO, CuO, or SnO₂.

The lithium dendrites are inevitably generated during several charge and discharge processes of a lithium metal battery. If left uncontrolled, the lithium dendrites eventually contact and pierce the separator, causing positive and negative electrodes to contact and thereby creating a safety problem. A composition, such as silicon dioxide, contained in the ceramic particles of the present application may undergo a lithium intercalation, so as to consume the lithium dendrites in time and improve the safety performance of the corresponding battery.

The reaction mechanisms of the ceramic particles of the present application consuming the lithium dendrites may be divided into an alloying reaction mechanism, an intercalation reaction mechanism, and a redox mechanism:
1) Alloying reaction mechanism: A metal oxide reacts with lithium dendrites, with a metal elementary substance being produced, and then the resulting metal elementary substance is subjected to a further alloying reaction to generate a lithium alloy, where the reaction equation is as follows:

   A*ₓ*O*_{y}* + 2*y*Li⁺ + 2*ye⁻*→*x*A + *y*Li₂O

   A + *z*Li⁺ + *ze*⁻↔Li*_{z}*A

   taking tin dioxide as an example, during a discharge process, a tin elementary substance and Li₂O are firstly produced, and then the tin elementary substance and Li⁺ react to produce an Li_{4.4}Sn compound.
2) Intercalation reaction mechanism: Li⁺ may only be embedded into a gap of an interlayer structure of a material in a charge and discharge process, with a chemical equation of the charge and discharge process being as follows:

   AO*ₓ* + *y*Li⁺ + *ye*⁻↔Li*_{y}*AO*ₓ*

   A representative ceramic material of the intercalation reaction mechanism is mainly SiO₂, TiO₂, lithium titanate, etc.
3) Conversion reaction mechanism: A metal oxide and Li⁺ are subjected to a redox to produce a metal elementary substance and Li₂O, with a chemical equation being as follows:

   A*ₓ*O*_{y}* + 2*y*Li⁺ + 2*ye⁻*→*x*A + *y*Li₂O

In some embodiments, optionally, the ceramic is a number of ceramic particles, and the ceramic particles has a volume-average particle size Dv50 ≥ 100 nm, optionally 100 nm-5 µm, and more optionally 200 nm-2 µm.

If the particle size of the ceramic particles is too large, the ceramic particles are relatively difficult to be embedded in the base film, and "powder shedding" may occur. If the particle size of the ceramic particles is too small, the ceramic particles may block the pores on a surface of an organic microporous material, reduces the air permeability of the separator, thus blocks the ion transmission channel, which is not beneficial for reduce the internal resistance of the separator.

In some embodiments, optionally, the boehmite-like layer is selected from one or more of boehmite, alumina, zirconia or magnesia.

In some embodiments, optionally, the thermally conductive layer has a thermal conductivity coefficient ≥ 20 W/(m.K); and
optionally, the thermally conductive layer is selected from one or more of boron nitride, tungsten nitride, silicon carbide, or aluminum nitride.

When the thermally conductive layer in the separator satisfies the above conditions, it is beneficial to improve the safety performance of the separator, and reduce the internal resistance of the separator is reduced.

In some embodiments, optionally, the base film is selected from one or more of polyethylene, polypropylene, polyvinylidene fluoride, aramid fiber, polyethylene terephthalate, polytetrafluoroethylene, polyacrylonitrile, polyimide, polyamide, polyester or natural fibers; and
optionally, the base film is selected from one or more of polyethylene, polypropylene, polyvinylidene fluoride, or polytetrafluoroethylene.

The separator of the present application may be prepared by a method generally used in the art. As an example, if a commercial base film is used, the separator of the present application may be prepared by the following method:
1) melting a base film of a separator, followed by extrusion to obtain a base film A;
2) uniformly dispersing ceramic particles on one surface of the base film A obtained in step 1) to obtain a composite base film; and
3) uniformly coating boehmite-like particles and an optional thermally conductive material onto the composite base film obtained in step 2) sequentially.

It should be noted that the melting in step 1) is to heat the base film of the separator to 120-250°C to enable the base film to reach a molten state so as to perform the extrusion. The "sequentially" in step 3) means that the boehmite-like layer is firstly applied, and then the optional thermally conductive material is coated onto a surface, away from the ceramic layer, of the boehmite-like.

In some embodiments, optionally, the base film of the separator is in a hot-molten state after the melting in step 1).

In some embodiments, optionally, in step 1), after the melting, the base film of the separator is continuously extruded in a molten state by a co-extrusion system such as a twin-screw extruder.

In some embodiments, optionally, in step 1), the base film A is a casted base film in a hot-molten state.

In some embodiments, optionally, step 1) further comprises a step of passing through a casting cooling roller after the extrusion.

In some embodiments, optionally, a temperature of the casting cooling roller in step 1) is 90-25°C.

In some embodiments, optionally, step 2) is performed synchronously with the passing through a casting cooling roller; or
step 2) is performed no later than 10 s-1 h, optionally no later than 1-30 min, and more optionally immediately after step 1).

It should be noted that the term "synchronously" in step 2) means that step 2) is performed synchronously with the passing through a casting cooling roller in step 1), i.e., film forming is performed while powder scattering or powder spraying.

In some embodiments, optionally, in step 2), the ceramic particles may be uniformly dispersed on one surface of the base film A obtained in step 1) by an on-line scattering or spraying device.

In some embodiments, optionally, step 2) further comprises a step of passing through a thermal compounding roller or drying in an oven.

In some embodiments, optionally, a temperature of the thermal compounding roller or the oven in step 2) is 80-190°C, optionally 100-180°C.

In some embodiments, optionally, a pressure of the thermal compounding roller in step 2) is 5-100 MPa, optionally 10-50 MPa.

Therefore, in some embodiments, optionally, step 2) satisfies one or more of the following conditions:
(1) a temperature of the thermal compounding roller is 80-190°C, optionally 100-180°C; and
(2) a pressure of the thermal compounding roller is 5-100 MPa, optionally 10-50 MPa.

In some embodiments, optionally, in step 2), the ceramic particles may be compounded with the casted base film A obtained in step 1) by one or more of the following methods before passing through the thermal compounding roller: powder blade coating, spraying, solution coating, or high-speed powder spraying.

In some embodiments, optionally, in step 3), the boehmite-like particles and the thermally conductive material may be coated by a gravure coating method or a wire bar coating method.

In some embodiments, optionally, the ceramic layer contains only a small amount of a binder (generally a polymer). As an example, the content of the binder may be 0-10 wt% based on the total weight of the ceramic layer. The binder may be selected from one or more of the following materials: polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyacrylate, fluorinated acrylate, a styrene butadiene rubber, sodium polyacrylate, polymethacrylic acid, polyacrylamide, polyvinyl alcohol, sodium alginate, carboxymethyl chitosan, and sodium carboxymethyl cellulose.

In some embodiments, optionally, the ceramic layer does not contain a binder.

As an example, if a polyolefin raw material is used, the separator of the present application may be prepared by the following method:
1) melting a mixture containing a base film raw material of a separator and a pore-forming agent, and then extruding the mixture to form a base film A;
2) uniformly dispersing the ceramic particles on one surface of the base film A to obtain a composite base film; and
3) uniformly coating boehmite-like particles and an optional thermally conductive material onto the composite base film obtained in step 2) sequentially.

In some embodiments, optionally, the melting in step 1) is to heat the base film of the separator to 120-250°C to enable the base film to reach a molten state so as to perform the extrusion. The "sequentially" in step 3) means that the boehmite-like layer is firstly applied, and then the optional thermally conductive material is coated onto a surface, away from the ceramic layer, of the boehmite-like.

In some embodiment, optionally, a mass ratio of the base film raw material of the separator to the pore-forming agent in the mixture of step 1) is (0.1-0.7) : 1.

In some embodiments, optionally, in step 1), the base film A is a casted base film in a hot-molten state.

In some embodiments, optionally, step 1) further comprises a step of passing through a casting cooling roller after the extrusion.

In some embodiments, optionally, a temperature of the casting cooling roller in step 1) is 90-25°C.

In some embodiments, optionally, the pore-forming agent in step 1) may be selected from one or more of a mineral oil, propylene carbonate (i.e., 1,2-propylene glycol carbonate), diethyl carbonate, or ethyl methyl carbonate.

In some embodiments, optionally, step 2) is performed synchronously with the passing through a casting cooling roller; or
step 2) is performed no later than 10 s-1 h, optionally no later than 1-30 min, and more optionally immediately after step 1).

In some embodiments, optionally, the term "synchronously" in step 2) means that step 2) is performed synchronously with the passing through a casting cooling roller in step 1), i.e., film forming is performed while powder scattering or powder spraying.

In some embodiments, optionally, in step 2), the ceramic particles may be uniformly dispersed on one surface of the base film A by an on-line scattering or spraying device.

In some embodiments, optionally, in step 2), a thermal compounding speed of the on-line scattering or spraying device is 0.5-5.0 m/min, optionally 0.5-2.0 m/min.

In some embodiments, optionally, step 2) further comprises a step of passing through a thermal compounding roller or drying in an oven.

In some embodiments, optionally, a temperature of the thermal compounding roller or the oven in step 2) is 80-190°C, optionally 100-180°C.

In some embodiments, optionally, a pressure of the thermal compounding roller in step 2) is 5-100 MPa, optionally 10-50 MPa.

In some embodiments, optionally, after step 2) and before step 3), a step of stretching the composite base film is further comprised.

In some embodiments, optionally, the stretching may be one or more of bi-directional asynchronous stretching and bi-directional synchronous stretching.

In some embodiments, optionally, the base film may be stretched according to porosity and strength requirements.

In some embodiments, optionally, after the composite base film is stretched, the method further comprises a step of extracting the pore-forming agent from the composite base film.

In some embodiments, optionally, an extractant used is selected from one or more of dichloromethane, trimethyl phosphate, or triethyl phosphate.

In some embodiments, optionally, the boehmite-like particles and the thermally conductive material may be coated by a gravure coating method or a wire bar coating method.

In some embodiments, optionally, the separator obtained in step 3) is rolled by a rolling system.

It should be noted that, in the present application, various factors such as the temperature of the thermal compounding roller and the oven, the speed of passing through the compounding roller, time for coating the ceramic particles after forming the casted base film, the coating amount or the particle size of the ceramic particles, etc., all have an influence on an embedding degree of the ceramic particles, where the influence of the temperature of the thermal compounding roller and the oven and the coating amount on the embedding degree is large, and the influence of other factors is relatively small.

In some embodiments, optionally, the embedding degree of the ceramic layer in the base film may be adjusted by adjusting the temperature of the thermal compounding roller and the oven, and the coating amount.

### [Secondary battery]

A second aspect of the present application provides a secondary battery comprising the separator of the first aspect of the present application. Generally, in addition to the separator, the secondary battery further comprises a positive electrode plate, a negative electrode plate, and an electrolyte.

In particular, the present application may also be used in a lithium metal battery to replace a conventional separator. The negative electrode may be a lithium metal or a lithium alloy, or no negative electrode exists. The corresponding positive electrode material is as described above. In the case of a lithium metal battery free of a negative electrode, the positive electrode material needs to provide a lithium source.

The secondary battery may be prepared by a method generally used in the art, for example, the positive electrode plate, the negative electrode plate, and the separator may be prepared as an electrode assembly by a winding process or a stacking process, and then an electrolyte may be injected into the electrode assembly and sealed to prepare the secondary battery.

It should be noted that the secondary battery of the present application comprises a button battery. When the secondary battery is a button battery, the materials of the positive electrode plate and the negative electrode plate may be the same or different. In addition, the button battery may be prepared by a method generally used by a separator of the present application may be prepared by a method generally used by those skilled in the art. As an example, the positive electrode plate, the separator, and the negative electrode plate may be assembled into an electrode assembly, and then an electrolyte solution is injected into the electrode assembly and sealed to prepare a button battery.

The above components of the secondary battery will be described below respectively.

### [Positive electrode plate]

A positive electrode plate comprises a positive electrode current collector and a positive electrode film layer arranged on at least one surface of the positive electrode current collector. As an example, the positive electrode current collector has two surfaces opposite in its own thickness direction, and the positive electrode film layer is arranged on either or both of opposite surfaces of the positive electrode current collector.

In some embodiments, the positive electrode current collector may be a metal foil or a composite current collector. For example, as a metal foil, an aluminum foil may be used. The composite current collector may comprise a polymer material base material and a metal layer formed on at least one surface of the polymer material base material. The composite current collector may be formed by forming a metal material (aluminum, an aluminum alloy, nickel, a nickel alloy, titanium, a titanium alloy, silver and a silver alloy, etc.) on a polymer material base material (such as polypropylene (PP), polyethylene terephthalate (PET), polybutylene terephthalate (PBT), polystyrene (PS), polyethylene (PE), etc.).

In the present application, the positive electrode material is a compound capable of reversibly intercalating and de-intercalating Li⁺.

In some embodiments, the positive electrode active material may be a positive electrode active material known in the art for batteries. As an example, a lithium-containing composite oxide, a spinel-like oxide, a metal chalcogenide having a layered structure, an olivine structure, etc., represented by LiₓMO₂ or Li_{y}M₂O₄ (wherein M is a transition metal, 0 ≤ x ≤ 1, 0 ≤ y < 2) may be listed. For example, a lithium cobalt oxide such as LiCoO₂, a lithium manganese oxide such as LiMn₂O₄, a lithium nickel oxide such as LiNiO₂, a lithium titanium oxide such as Li_{4/3}Ti_{5/3}O₄, a lithium manganese nickel composite oxide, a lithium manganese nickel cobalt composite oxide, and a material having an olivine crystal structure such as LiMPO₄ (M = Fe, Mn, and Ni) may be listed.

In some embodiments, optionally, the positive electrode active material is a lithium-containing composite oxide of a layered structure or a spinel-like structure, such as a lithium manganese nickel composite oxide represented by LiCoO₂, LiMn₂O₄, LiNiO₂, LiNi_{1/2}Mn_{1/2}O₂, etc., a lithium manganese nickel cobalt composite oxide represented by LiNi_{1/3}Mn_{1/3}Co_{1/3}O₂, LiNi_{0.6}Mn_{0.2}Co_{0.2}O₂, etc., or a lithium-containing composite oxide such as LiNi_{1-x-y-z}CoₓAl_{y}Mg_{z}O₂ (in the formula, 0 ≤ x ≤ 1, 0 ≤ y ≤ 0.1, 0 ≤ z ≤ 0.1, and 0 ≤ 1 - x - y - z ≤ 1). In addition, the lithium-containing composite oxide with a part of constituent elements in the lithium-containing composite oxide substituted with an additive element such as Ge, Ti, Zr, Mg, Al, Mo, Sn, etc., is also included in the scope of the present application.

Except the positive electrode active materials, other traditional materials that may be used as positive electrode active materials of the batteries may further be used. These positive electrode active materials may be used alone or in combination of two or more. For example, by using the lithium-containing composite oxide having a layered structure and the lithium-containing composite oxide having a spinel structure at the same time, both a large capacity and an improved safety may be achieved.

In some embodiments, the positive electrode film layer further optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, optionally, the conductive agent accounts for 0.05-5%, optionally 0.5-3% of the total weight of the positive electrode film layer.

In some embodiments, the positive electrode film layer further optionally comprises a binder, such as a binder generally used in the field of batteries of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyethylene oxide, etc.

In some embodiments, optionally, the binder accounts for 0.1-3.5%, optionally 0.5-2.5% of the total weight of the positive electrode film layer.

In some embodiments, the positive electrode plate may be prepared by the following method: dispersing the above-mentioned components for preparing the positive electrode plate, such as a positive electrode active material, a conductive agent, a binder and any other components, in a solvent (e.g., N-methyl pyrrolidone) to form a positive electrode slurry; and coating the positive electrode current collector with the positive electrode slurry, followed by the procedures such as drying and cold pressing, so as to obtain the positive electrode plate.

### [Negative electrode plate]

A negative electrode plate comprises a negative electrode current collector and a negative electrode film layer arranged on at least one surface of the negative electrode current collector. As an example, the negative electrode current collector has two surfaces opposite in its own thickness direction, and the negative electrode film layer is arranged on either or both of the two opposite surfaces of the negative electrode current collector.

In some embodiments, the negative electrode current collector may be a metal foil or a composite current collector. For example, as a metal foil, a copper foil may be used. The composite current collector may comprise a polymer material base material and a metal layer formed on at least one surface of the polymer material base material. The composite current collector may be formed by forming a metal material (copper, a copper alloy, nickel, a nickel alloy, titanium, a titanium alloy, silver and a silver alloy, etc.) on a polymer material base material (e.g., polypropylene (PP), polyethylene terephthalate (PET), polybutylene terephthalate (PBT), polystyrene (PS), polyethylene (PE), etc.).

In the present application, the negative electrode material is a compound capable of intercalating and de-intercalating a lithium metal or lithium.

In some embodiments, the negative electrode active material may be a negative electrode active material known in the art for batteries. As an example, various materials such as an alloy or an oxide of aluminum, silicon, tin, etc., a carbon material, etc., may be used as the negative electrode active material. Optionally, the oxide may be titanium dioxide, etc., and the carbon material may be graphite, pyrolytic carbons, cokes, glassy carbons, a sintered body of an organic polymer compound, mesophase carbon microbeads, etc. The tin-based material may be selected from at least one of elemental tin, tin oxides, and tin alloys. However, the present application is not limited to these materials, and other conventional materials that may be used as negative electrode active materials for batteries may further be used. These negative electrode active materials may be used alone or as a combination of two or more.

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers.

In some embodiments, optionally, the conductive agent accounts for 0.05-5%, optionally 0.5-3% of the total weight of the negative electrode film layer.

In some embodiments, the negative electrode film layer further optionally comprises a binder, such as a binder generally used in the field of batteries of polyvinylidene fluoride, polytetrafluoroethylene, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, polyethylene oxide, etc.

In some embodiments, optionally, the binder accounts for 0.1-3.5%, optionally 0.5-2.5% of the total weight of the negative electrode film layer.

In some embodiments, the negative electrode film layer may optionally comprise other auxiliary agents, such as a thickener (e.g. sodium carboxymethyl cellulose (CMC-Na)).

In some embodiments, the negative electrode plate may be prepared by the following method: dispersing the above-mentioned components for preparing the negative electrode plate, such as a negative electrode active material, a conductive agent, a binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

### [Electrolyte]

An electrolyte functions to conduct ions between the positive electrode plate and the negative electrode plate. The type of the electrolyte is not specifically limited in the present application, and may be selected according to actual requirements. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, a nonaqueous solvent (an organic solvent) is used as a nonaqueous electrolyte solution. The nonaqueous solvent comprises carbonates, ethers, etc.

In some embodiments, the carbonates comprise cyclic carbonates and chain carbonates. The cyclic carbonates including ethylene carbonate, propylene carbonate, butylene carbonate, γ-butyrolactone, sulfur esters (ethylene glycol sulfide), etc., may be listed. The chain carbonates including low-viscosity polar chain carbonate compounds represented by dimethyl carbonate, diethyl carbonate, ethyl methyl carbonate, and aliphatic branched carbonate compounds may be listed A mixed solvent of the cyclic carbonates (particularly, ethylene carbonate) and the chain carbonates is particularly preferred.

Ethers including tetraethylene glycol dimethyl ether (TEGDME), ethylene glycol dimethyl ether (DME), 1,3-dioxolane (DOL), etc. may be listed.

In addition to the above-mentioned nonaqueous solvent, chain alkyl esters such as methyl propionate, and chain phosphotriesters such as trimethyl phosphate, nitrile solvents such as 3-methoxypropionitrile, and nonaqueous solvents (an organic solvent) such as a branched-chain compound having an ether bond represented by a dendritic compound may further be used.

In addition, fluorine-based solvents may also be used.

As the fluorine-based solvents, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, or a (perfluoroalkyl) alkyl ether with a linear structure of CF₃CHFCF₂OCH₃, CF₃CHFCF₂OCH₂CH₃, etc., such as 2-trifluoromethylhexafluoropropyl methyl ether, 2-trifluoromethylhexafluoropropyl ethyl ether, 2-trifluoromethylhexafluoropropyl propyl ether, 3-trifluoromethyloctafluorobutyl methyl ether, 3-trifluoromethyloctafluorobutyl ethyl ether, 3-trifluoromethyloctafluorobutyl propyl ether, 4-trifluoromethyldecafluoropentyl methyl ether, 4-trifluoromethyldecafluoropentyl ethyl ether, 4-trifluoromethyldecafluoropentyl propyl ether, 5-trifluoromethyldodecafluorohexyl methyl ether, 5-trifluoromethyldodecafluorohexyl ethyl ether, 5-trifluoromethyldodecafluorohexyl ethyl ether, 6-trifluoromethyltetradecafluoroheptyl methyl ether, 6-trifluoromethyl tetradecafluoroheptyl ethyl ether, 6-trifluoromethyltetradecafluoroheptyl propyl ether, 7-trifluoromethylhexadecylfluorooctyl methyl ether, 7-trifluoromethylhexadecylfluorooctyl ethyl ether, 7-trifluoromethylhexadecylfluorooctyl propyl ether, etc., may be listed.

In addition, the above-mentioned iso(perfluoroalkyl) alkyl ether and the above-mentioned (perfluoroalkyl) alkyl ether having a linear structure may also be used in combination.

As the electrolyte salt used in the nonaqueous electrolyte solution, lithium salts such as lithium perchlorate, an organoboron lithium salt, a lithium salt of a fluorine-containing compound, a lithium imide salt, etc., are preferred.

As an example of such electrolyte salts, LiClO₄, LiPF₆, LiBF₄, LiAsF₆, LiSbF₆, LiCF₃SO₃, LiCF₃CO₂, LiC₂F₄(SO₃)₂, LiN(C₂F₅SO₂)₂, LiC(CF₃SO₂)₃, LiCₙF₂ₙ₊₁SO₃ (n ≥ 2), LiN(R_{f}OSO₂)₂ (wherein R_{f} is fluoroalkyl), etc., may be listed. Among these lithium salts, fluorine-containing organic lithium salts are particularly preferred. The fluorine-containing organic lithium salts are highly anionic and easily separated into ions, and therefore easily dissolved in the nonaqueous electrolyte solution.

A concentration of the electrolyte lithium salt in the nonaqueous electrolyte solution is, for example, 0.3 mol/L (mol/liter) or more, and more preferably 0.7 mol/L or more; and optionally 1.7 mol/L or less, and more preferably 1.2 mol/L or less. If the concentration of the electrolyte lithium salt is too low, the ionic conductivity is too low. If the concentration is too high, there is a concern that the electrolyte salt that cannot be completely dissolved precipitates.

In some embodiments, the electrolyte solution may optionally comprise an additive which is not particularly limited by the present application. For example, the additive may comprise a negative electrode film-forming additive and a positive electrode film-forming additive, and may further comprise an additive that may improve certain performances of the batteries, such as an additive that improves an overcharge performance of the batteries, or an additive that improves a high-temperature or low-temperature performance of the batteries.

### [Battery module, battery pack, and power consuming device]

A third aspect of the present application provides a battery module, comprising a secondary battery of the second aspect of the present application. The battery module may be prepared by a method generally used in the art.

A fourth aspect of the present application provides a battery pack comprising a battery module of the third aspect of the present application. The battery pack may be prepared by a method generally used in the art.

A fifth aspect of the present application provides a power consuming device comprising at least one selected from the secondary battery of the second aspect of the present application, the battery module of the third aspect of the present application or the battery pack of the fourth aspect of the present application.

In addition, the secondary battery, the battery module, the battery pack, and the power consuming device of the present application are described below with reference to the accompanying drawings as appropriate.

In some embodiments, the secondary battery may comprise an outer package. The outer package may be used to encapsulate the above-mentioned electrode assembly and an electrolyte.

In some embodiments, the outer package of the secondary battery may be a hard shell, for example, a hard plastic shell, an aluminum shell, a steel shell, etc. The outer package of the secondary battery may also be a soft bag, for example, a pouch-type soft bag. The material of the soft bag may be plastics. As the plastics, polypropylene, polybutylene terephthalate, polybutylene succinate, etc. may be listed.

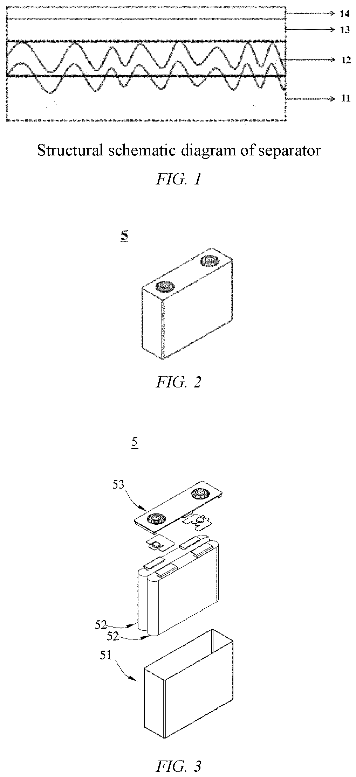

The shape of the secondary battery is not particularly limited in the present application and may be cylindrical, square or of any other shape. For example, FIG. 2 shows a secondary battery 5 with a square structure as an example.

In some embodiments, referring to FIG. 3, the outer package may comprise a shell body 51 and a cover plate 53. Herein, the shell body 51 may comprise a bottom plate and side plates connected to the bottom plate, and the bottom plate and the side plates enclose to form an accommodating cavity. The shell body 51 has an opening in communication with the accommodating cavity, and the cover plate 53 may cover the opening to close the accommodating cavity. The positive electrode plate, the negative electrode plate, and the separator may be subjected to a winding process or a stacking process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and may be selected by those skilled in the art according to actual requirements.

In some embodiments, the secondary battery may be assembled into a battery module, and the number of the secondary batteries contained in the battery module may be one or more, and the specific number may be selected by those skilled in the art according to the application and capacity of the battery module.

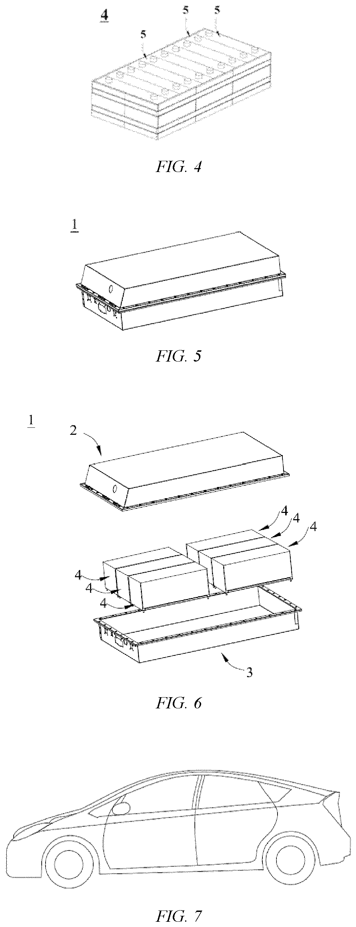

FIG. 4 shows a battery module 3 as an example. Referring to FIG. 4, in the battery module 4, a plurality of secondary batteries 5 may be arranged in sequence in a length direction of the battery module 4. Apparently, the secondary batteries may also be arranged in any other manner. Furthermore, the plurality of secondary batteries 5 may be fixed by fasteners.

Optionally, the battery module 4 may further comprise an outer shell with an accommodating space, and the plurality of secondary batteries 5 are accommodated in the accommodating space.

In some embodiments, the above battery module may further be assembled into a battery pack, the number of the battery modules contained in the battery pack may be one or more, and the specific number may be selected by those skilled in the art according to the application and capacity of the battery pack.

FIGs. 5 and 6 show a battery pack 1 as an example. Referring to FIG. 5 and FIG. 6, the battery pack 1 may comprise a battery box and a plurality of battery modules 4 arranged in the battery box. The battery box comprises an upper box body 2 and a lower box body 3, wherein the upper box body 2 may cover the lower box body 3 to form a closed space for accommodating the battery modules 4. The plurality of battery modules 4 may be arranged in the battery box in any manner.

In addition, the present application further provides a power consuming device. The power consuming device comprises at least one of the secondary battery, the battery module, or the battery pack provided by the present application. The secondary battery, the battery module or the battery pack may be used as a power source of the power consuming device or as an energy storage unit of the power consuming device. The power consuming device may comprise a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and a satellite, an energy storage system, etc., but is not limited thereto.

As for the power consuming device, the secondary battery, the battery module or the battery pack may be selected according to use requirements thereof.

FIG. 7 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may use a secondary battery as a power source.

### Examples

Hereinafter, the examples of the present application will be explained. The examples described below are exemplary and merely for explaining the present application, and should not be construed as limiting the present application. The examples in which techniques or conditions are not specified are based on the techniques or conditions described in references in the art or according to the product introduction. The reagents or instruments used therein for which manufacturers are not specified are all conventional products that are commercially available. Unless otherwise specified, the mass of substances used in the section of Examples is based on the mass not containing crystal water.

### I. Separator

### Example 1

1) polyethylene (purchased from Sigma-Aldrich, CAS No. 9002-88-4) and a mineral oil (a pore-forming agent) are mixed at a weight ratio of 1 : 10, and then the mixture is heated to 150°C to form a molten state; and after co-extruded through a die head, the mixture is passed through a casting cooling roller at 80°C to form a casted base film A with a thickness of 7 µm;
2) during the process of forming the casted base film A through the casting cooling roller in step 1), ZnO particles with a volume-average particle size Dv50 of 100 nm are uniformly dispersed on one surface of the casted base film A through an on-line spraying device synchronously, and then the casted base film A and ceramic are thermally compounded through a thermal compounding roller at a thermal compounding temperature of 170°C, a pressure of 10 MPa, and a speed of 1.5 m/min;
3) the composite base film is subjected to a bidirectional synchronous stretching by a stretching system;
4) the pore-forming agent in the base film is extracted by using dichloromethane as an extractant to obtain a semi-finished product of a composite separator;
5) alumina (a mixture of alumina and a binder (polyacrylate with a number-average molecular weight of 9,000) at a weight ratio of 0.91 : 0.04 formed a slurry with the solid content of 35% in deionized water) is uniformly dispersed on a ceramic layer by using a wire bar coating method, wherein the coating thickness after drying is 2 µm;
6) boron nitride (a mixture of boron nitride and a binder (polyvinylidene fluoride, PVDF, with a number-average molecular weight of 500,000) at a weight ratio of 0.91 : 0.04 formed a slurry with the solid content of 35% in deionized water) is uniformly dispersed on an alumina layer by using a wire bar coating method, wherein a coating thickness after drying is 1 µm; and
7) winding is performed through a winding system.

Except the following conditions, the preparation conditions of examples 2-22 and comparative examples 1-3 were similar to example 1 specifically referring to Table 1,
wherein the temperature/pressure of the thermal compounding roller in examples 7-9 are 110°C/0.8 MPa, 110°C/5 MPa, and 140°C/7 MPa respectively.

### II. Button battery

Lithium plates having a diameter (Φ) of 18 mm are used for both positive and negative electrodes, and have a thickness of 250 µm. An interlayer is the separator prepared in the examples and comparative examples. Then an appropriate amount of an electrolyte solution (only by ensuring that the electrode plates and the separator are completely infiltrated) is dropwise added to assemble a Model 2430 button battery. The electrolyte solution is prepared by the following method: ethylene carbonate (EC) and dimethyl carbonate (DMC) are mixed at a volume ratio of 1 : 1, then LiPF₆ is added, and the materials are stirred uniformly to enable the concentration of the LiPF₆ to be 1 mol/L.

### Measurement methods for related parameters

### 1. Particle size test of ceramic particle

Analysis of particle size Dv50: a diameter of the particles accounting for 50% of the total volume is greater than the certain value, and a diameter of other particles accounting for 50% of the total volume is less than the value, and Dv50 represents a median particle size of a powder.

Under an irradiation of a laser beam, an angle of a scattered light of the particles is in an inverse relation with the diameter of the particles, the scattered light intensity is logarithmically attenuated along with an increase of the angle, the energy distribution of the scattered light is directly related to the diameter distribution of the particles, and the particle size distribution characteristic of the particles may be obtained by receiving and measuring the energy distribution of the scattered light. A reference standard is the GB/T19077.1-2009 particle size distribution laser diffraction method.

### 2. Constant voltage test of button battery

Testing process: a button battery is discharged to 100 mV at 1 mA/cm² with a constant current, rested for 10 min, and held at a constant voltage of 100 mV for 5 days. The time when the peak large current of 200-600 mA appears stably is recorded as the time when the battery system ran safely and normally, namely the occurrence time of short circuit in Table 1.

### 3. Measurement of percentage of thickness of portion of ceramic layer embedded in base film accounting for the total thickness of ceramic layer

A separator is broken by quenching with liquid nitrogen to obtain a flat separator section. The thickness of a ceramic layer is measured by using a ZEISS sigma 300 scanning electron microscope according to the standard JYAT010-1996. The percentage is obtained by dividing the thickness of the ceramic layer embedded in the base film by the total thickness of the ceramic layer multiplied by 100%.

Other thicknesses in the present application may be measured by reference to the above-mentioned methods.

### 4. Ionic conductivity test of separator

Testing process: a symmetrical stacked battery containing the separator is manufactured, where a conventional graphite plate is used as an anode plate, a Cu plate is used as a current collector, and an electrolyte solution is the same as the electrolyte solution of the button battery. A frequency range of an alternating current impedance spectrum test is 1 MHz-1 kHz with an amplitude of 5 mV. The ionic conductivity (mS/cm) of the separator may be obtained according to the separator resistance R = ρL/S * n (L, S, and n are the thickness, area, and number of layers of the separator in the test respectively).

**Table 1 Experimental conditions and results of examples and comparative examples**

| | **Base film** | | **Ceramic layer** | | | | **Boehmite-like layer** | | **Thermally conductive layer** | | **Occurrence time of short circuit** | **Ionic conductiv ity of separator (mS/cm)** |
|---|---|---|---|---|---|---|---|---|---|---|---|---|
| No. | **Mate rial** | **Thick ness (µm)** | **Mate rial** | **Thick ness (µm)** | **Thick ness percen tage of cerami c layer embed ded in base film** | **Amo unt of bind er (wt %)** | **Mate rial** | **Thick ness (µm)** | **Material** | **Thickness (µm)** | **t (h)** | |
| Example 1 | PE | 7 | ZnO | 2 | 100% | 0% | Alum ina | 2 | Boron nitride | 1 | 25.2 | 0.62 |
| Example 2 | PE | 7 | SnO₂ | 2 | 100% | 0% | Alum ina | 2 | Boron nitride | 1 | 37.8 | 0.80 |
| Example 3 | PE | 7 | Fe₂O₃ | 2 | 100% | 0% | Alum ina | 2 | Boron nitride | 1 | 28.8 | 0.67 |
| Example 4 | PE | 7 | NiO | 2 | 100% | 0% | Alum ina | 2 | Boron nitride | 1 | 21.6 | 0.63 |
| Example 5 | PE | 7 | TiO₂ | 2 | 100% | 0% | Alum | 2 | Boron | 1 | 20.2 | 0.69 |
| | | | | | | | ina | | nitride | | | |
| Example 6 | PE | 7 | CuO | 2 | 100% | 0% | Alum ina | 2 | Boron nitride | 1 | 20.7 | 0.66 |
| Example 7 | PE | 7 | SnO₂ | 2 | 10% | 10% | Alum ina | 2 | Boron nitride | 1 | 37 | 0.65 |
| Example 8 | PE | 7 | SnO₂ | 2 | 50% | 7% | Alum ina | 2 | Boron nitride | 1 | 38.3 | 0.68 |
| Example 9 | PE | 7 | SnO₂ | 2 | 80% | 3% | Alum ina | 2 | Boron nitride | 1 | 37.9 | 0.76 |
| Example 10 | PE | 7 | SnO₂ | 0.5 | 100% | 0% | Boeh mite | 2 | Boron nitride | 1 | 27.0 | 0.59 |
| Example 11 | PE | 7 | SnO₂ | 7 | 100% | 0% | Boeh mite | 2 | Boron nitride | 1 | 43.2 | 0.53 |
| Example 12 | PE | 7 | SnO₂ | 10 | 70% | 5% | Boeh mite | 2 | Boron nitride | 1 | 48.6 | 0.52 |
| Example 13 | PP | 7 | SnO₂ | 2 | 100% | 0% | Zirco nia | 0.5 | Boron nitride | 1 | 32.4 | 0.73 |
| Example 14 | PP | 7 | SnO₂ | 2 | 100% | 0% | Zirco nia | 7 | Boron nitride | 1 | 34.2 | 0.74 |
| Example 15 | PP | 7 | SnO₂ | 2 | 100% | 0% | Zirco nia | 10 | Boron nitride | 1 | 36.0 | 0.52 |
| Example 16 | PE | 7 | SnO₂ | 2 | 100% | 0% | Magn esia | 2 | Aluminium nitride | 0.5 | 30.6 | 0.77 |
| Example 17 | PE | 7 | SnO₂ | 2 | 100% | 0% | Magn esia | 2 | Aluminium nitride | 2 | 34.2 | 0.76 |
| Example 18 | PE | 4 | SnO₂ | 2 | 100% | 0% | Alum ina | 2 | Boron nitride | 1 | 33.3 | 0.68 |
| Example 19 | PE | 5 | SnO₂ | 2 | 100% | 0% | Alum ina | 2 | Boron nitride | 1 | 34.2 | 0.66 |
| Example 20 | PE | 12 | SnO₂ | 2 | 100% | 0% | Alum ina | 2 | Boron nitride | 1 | 41.4 | 0.77 |
| Example 21 | PE | 20 | SnO₂ | 2 | 100% | 0% | Alum ina | 2 | Boron nitride | 1 | 43.2 | 0.71 |
| Example 22 | PE | 7 | SnO₂ | 2 | 100% | 0% | Alum ina | 2 | / | / | 34.2 | 0.78 |
| Comparative example 1 | PE | 7 | / | / | / | / | Alum ina | 2 | Boron nitride | 1 | 18 | 0.57 |
| Comparative example 2 | PE | 7 | / | / | / | / | Alum ina | 3 | / | / | 14.7 | 0.55 |
| Comparative example 3 | PE | 7 | / | / | / | / | / | / | / | / | 14 | 0.39 |

As can be seen from the results of Table 1, the secondary battery using the separator of the present application has a relatively good safety performance and a relatively high ionic conductivity. Without bound by any theory, it is possible that the separator of the present application may effectively consume lithium dendrites, and avoid the dendrites from piercing the separator to cause a short circuit, thereby improving the safety performance of the separator. Meanwhile, the relatively high ionic conductivity indicates that the internal resistance of the separator is relatively small, indicating that the technical solution of the present application may simultaneously realize the relatively low internal resistance of the separator. In addition, as can be seHen from Table 1, by adjusting the type of the ceramic particles and the thickness of each layer, the safety performance of the separator may be further improved and the internal resistance of the separator may be reduced.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that may be conceived by those skilled in the art to the embodiments, and other modes constructed by combining some of the constituent elements of the embodiments also fall within the scope of the present application.

## Claims

1. A separator comprising a base film and a coating on the base film, wherein the coating comprises a ceramic layer partially embedded in the base film and a boehmite-like layer on the ceramic layer.

2. The separator according to claim 1, wherein a portion of the ceramic layer embedded in the base film accounts for 5%-100%, optionally 10%-100%, and more optionally 50%-100% of the total thickness of the ceramic layer.

3. The separator according to claim 1 or 2, wherein the coating further comprises a thermally conductive layer on a surface, away from the base film, of the boehmite-like layer.

4. The separator according to any one of claims 1 to 3, wherein the separator satisfies at least one of the following conditions:
(1) a thickness of the ceramic layer is 0.5-10 µm, optionally 2-7 µm;
(2) a thickness of the base film is 4-20 µm, optionally 5-12 µm;
(3) a thickness of the boehmite-like layer is 0.5-10 µm, optionally 2-7 µm; and
(4) a thickness of the thermally conductive layer is 0.5-2 µm, optionally 0.5-1 µm.

5. The separator according to any one of claims 1 to 4, wherein
the ceramic is selected from one or more of an oxide, a nitride, a fluoride or an oxysalt of the following elements: Al, Fe, Ti, Co, Zn, Cu, Ni, Mn or Sn;
optionally, the ceramic is selected from one or more of an Fe oxide, an Fe oxysalt, a Ti oxide, a Ti oxysalt, a Zn oxide, NiO, CuO, or SnO₂; and
more optionally, the ceramic is selected from one or more of Fe₂O₃, FePO₄, TiO₂, ZnO, Li₄Ti₅O₁₂, NiO, CuO, or SnO₂.

6. The separator according to any one of claims 1 to 5, wherein
the ceramic is a number of ceramic particles, and the ceramic particles have a volume-average particle size Dv50 ≥ 100 nm, optionally 100 nm-5 µm, and more optionally 200 nm-2 µm.

7. The separator according to any one of claims 1 to 6, wherein
the boehmite-like layer is selected from one or more of boehmite, alumina, zirconia or magnesia.

8. The separator according to any one of claims 3 to 7, wherein
the thermally conductive layer has a thermal conductivity coefficient ≥ 20 W/(m.K); and
optionally, the thermally conductive layer is selected from one or more of boron nitride, tungsten nitride, silicon carbide, or aluminum nitride.

9. The separator according to any one of claims 1 to 8, wherein
the base film is selected from one or more of polyethylene, polypropylene, polyvinylidene fluoride, aramid fiber, polyethylene terephthalate, polytetrafluoroethylene, polyacrylonitrile, polyimide, polyamide, polyester or natural fibers; and
optionally, the base film is selected from one or more of polyethylene, polypropylene, polyvinylidene fluoride, or polytetrafluoroethylene.

10. A method for preparing the separator according to any one of claims 1 to 9, comprising the steps of:
1) melting a mixture containing a base film raw material of a separator and a pore-forming agent, and then extruding the mixture to form a base film A;
2) uniformly dispersing the ceramic particles on one surface of the base film A to obtain a composite base film; and
3) uniformly coating boehmite-like particles and an optional thermally conductive material onto the composite base film obtained in step 2) sequentially.

11. The method according to claim 10, wherein a mass ratio of the base film raw material of a separator to the pore-forming agent in the mixture of step 1) is (0.1-0.7) : 1.

12. The method according to any one of claims 10 to 11, wherein step 1) further comprises a step of passing through a casting cooling roller after the extrusion.

13. The method according to claim 12, wherein step 2) is performed synchronously with the passing through a casting cooling roller in claim 12; or
step 2) is performed no later than 10 s-1 h, optionally no later than 1-30 min, and more optionally immediately after step 1).

14. The method according to any one of claims 10 to 13, wherein step 2) further comprises a step of passing through a thermal compounding roller or drying in an oven.

15. The method according to claim 14, wherein step 2) satisfies one or more of the following conditions:
(1) a temperature of the thermal compounding roller is 80-190°C, optionally 100-180°C; and
(2) a pressure of the thermal compounding roller is 5-100 MPa, optionally 10-50 MPa.

16. The method according to any one of claims 10 to 15, wherein the method further comprises a step of stretching the composite base film, after step 2) and before step 3).

17. The method according to claim 16, wherein the method further comprises a step of extracting the pore-forming agent from the composite base film, after the composite base film is stretched.

18. A secondary battery, comprising a separator according to any one of claims 1 to 9, or a separator prepared by the method according to any one of claims 10 to 17.

19. A battery module, comprising a secondary battery according to claim 18.

20. A battery pack, comprising at least one of a secondary battery according to claim 18, or a battery module according to claim 19.

21. A power consuming device, comprising at least one selected from a secondary battery according to claim 18, a battery module according to claim 19 or a battery pack according to claim 20.
